# EUROPEAN PATENT APPLICATION

(11) **EP 2 044 837 A1**
(43) Date of publication of application: **08.04.2009**
(21) Application number: 07253888.7
(22) Date of filing: 01.10.2007
(51) Int. Cl.: A01K 15/02, A01K 1/03

(54) **Dwelling and activity centre for a pet**

(71) Applicant: TCH Feline, Inc., Glen Burnie, MD 21061-8200 (US)
(72) Inventor: Howden, Annie, Hanover Maryland 21076 (US)
(74) Representative: Deans, Michael John Percy

(57) **Abstract**

A dwelling and activity centre (10) for a pet comprises a unitary portable structure defining a feeding station and a sleeping station. The structure has a planar base member (20). At least one recess (21) is formed in a top surface (22) of the base member and seats a removable plate or saucer (24), thereby defining the feeding station. A housing (26) is directly connected to the base member (20) and has a front opening (27) allowing access for a pet to the interior thereof. The housing (26) defines a sleeping station, and may receive a removable pillow (37) or cushion. The centre includes a play station comprising one or more of, and preferably both of, a support directly joined to the housing (26) and extending laterally thereof at a level above the planar base member (20) and mounting one or more pet toys, and means, providing a scratching surface, preferably a scratch pole (31), upstanding from and directly coupled to the base member (20).

## Description

This disclosure relates to dwelling and activity centres for pets.

Within a home, cats are commonly provided both with places to sleep and with scratching posts provided to distract the cat from scratching household furniture. To provide a place to sleep, a sleeping basket may be placed at some remote location within the home where it is unlikely to be tripped over or otherwise form an obstruction to the human occupants. Scratching posts are typically provided separately.

Combined dwelling and activity centres for pets have been previously proposed.

Thus, in US 5184568, Healey proposes a structure simulating an easy chair provided with a cushion on the seat allowing a pet to sleep, being provided with scratching surfaces and with a tethered catnip ball. Optionally a litter tray may be slid from beneath the seat.

US 5050536 Baker disclosed a playhouse for cats formed from a plurality of panels which may be collapsed for storage. The playhouse defines a plurality of levels and passageways therein. A cat may choose to sleep within one of the interior compartments.

Such prior devices suffer from being over complicated. While cats enjoy climbing, and older or infirm cat may be unable or unwilling to climb to find a place to sleep.

There is provided, in accordance with the present disclosure, a dwelling and activity centre for a pet, comprising a unitary portable structure defining a feeding station and a sleeping station, the structure comprising: a planar base member; at least one recess formed in a top surface of the base member and adapted to seat a removable plate or saucer, thereby defining said feeding station; a housing directly connected to said base member and having a front opening allowing access for a pet to the interior thereof, the housing being adapted to receive a removable pillow or cushion, thereby defining said sleeping station; and a play station comprising one or more of a support directly joined to said housing and extending laterally thereof at a level above the planar base member and mounting one or more pet toys, and means, providing a scratching surface, upstanding from and directly coupled to said base member.

Applicant's centre has the great advantage that it provides a unitary structure on a planar base which is readily movable from one position to another and allows access to pets of all ages and states of health to readily reach the feeding, sleeping and play stations.

The means providing a scratching surface is preferably a scratch pole. Preferably both a toy support and a scratch pole are provided.

The recess may be part spherical in configuration extending downwardly from the top surface of the base plate and terminating above a bottom surface thereof. Removable saucers may be provided with the dwelling and activity centre and adapted to fit in the recess with a top lip of the saucer remaining exposed above the top surface of the base member.

The support may mount one or more novelty mobiles above the level of the base member. The scratch pole and the support are preferably positioned relative to each other so that an animal may freely rotate the mobiles about the support without interference with the scratch pole. The feeding station and the play station are preferably separated from each other by the housing. The planar base member suitably has a first end and a second end, the feeding station being defined adjacent one said end with the housing located centrally between the two ends. In an alternative arrangement a second housing may be provided spaced from the first said housing and also directly connected to the base member, and the support may extend between the two housings.

Embodiments of dwelling and activity centres for pets are described by way of example only with reference to the accompanying drawings, in which:-
Fig. 1 is a front elevational view of a combined dwelling and activity centre for a pet;
Fig. 2 is a top plan view of the structure of Fig. 1;
Fig. 3 is a front elevational view showing a second embodiment of dwelling and activity centre;
Fig. 4 is a top plan view of the embodiment of Fig. 3; and
Fig. 5 is a cross-sectional view of the structure shown in Fig. 1.

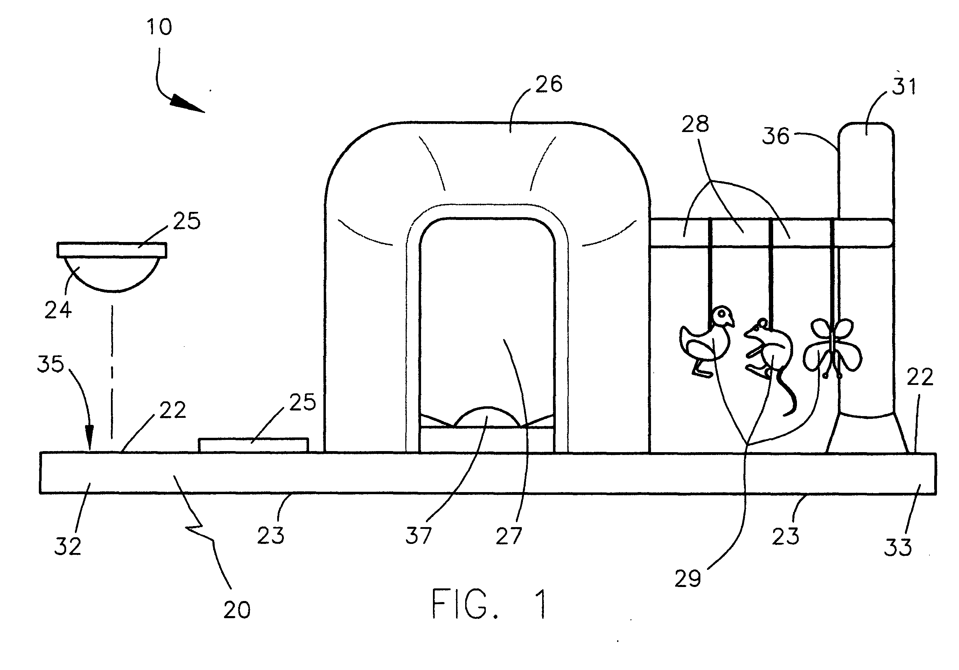

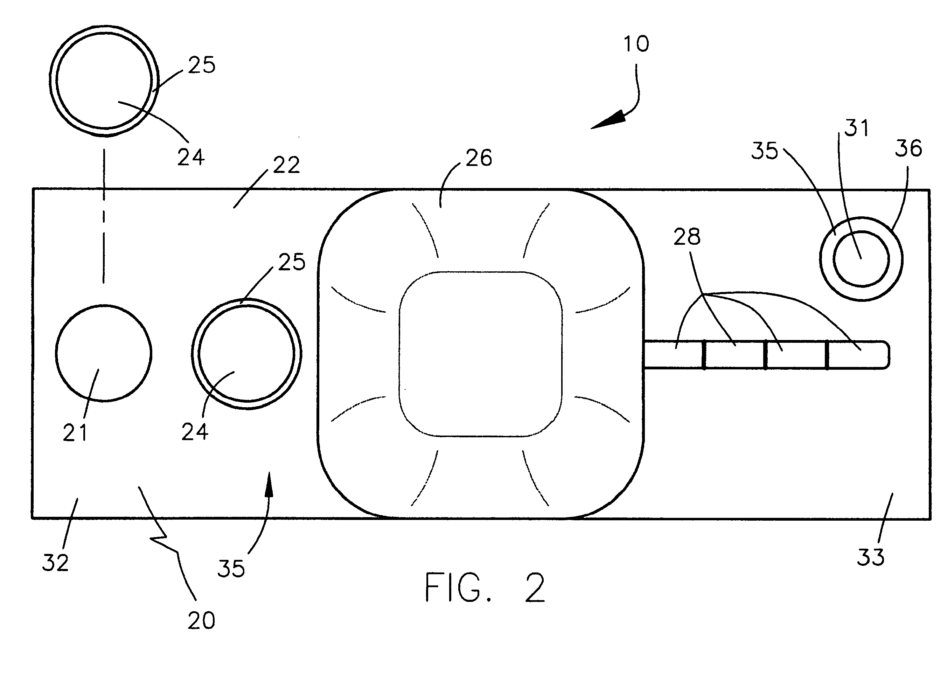

A combined dwelling and activity centre 10 for a pet is shown in Figs. 1 and 2 and comprises a unitary portable structure defining a sleeping station, a feeding station and a play station.

A planar base member 20 is provided with at least one recess 21 extending downwardly from a top surface 22 of the base member and terminating above a bottom surface 23 thereof. In this embodiment recess 21 is part spherical in configuration. A saucer 24 is removably seated in the recess and is provided with a top lip 25 which remains exposed above the top surface 22 when the saucer is seated.

A housing 26 provides a sleeping station. It is directly connected to the base member 20 and has a front opening 27 conveniently positioned adjacent a longitudinal side of the base member 20 and allowing access for a pet to the interior of housing 26. A support 28, here in the form of a cylindrical shaft is directly joined to the housing and extends laterally thereof at a level above the base member 20. Directly joining the support to the housing enables an agile cat to walk along the entire length of support 28. As shown in Fig. 1, a plurality of novelty mobiles 29 are tethered to the support shaft 28 above the level of the base member 20. It will readily be understood that such mobiles may be produced in many different sizes, shapes and colours. The mobiles 29 are preferably connected via hook and loop fasteners so that a damaged mobile may be replaced.

Upstanding from and directly coupled to the base member is a scratching surface, here provided as a generally cylindrical scratch pole 31. As best shown in the plan view of Fig. 2, the scratch pole is spaced from the support shaft to allow the pet to freely rotate the mobiles 29 about the support 28 without interference with the scratch pole 31. Scratch pole 31 is preferably both sized and positioned so that a cat may climb the pole and catch mobiles 29 as they are spun about the support shaft.

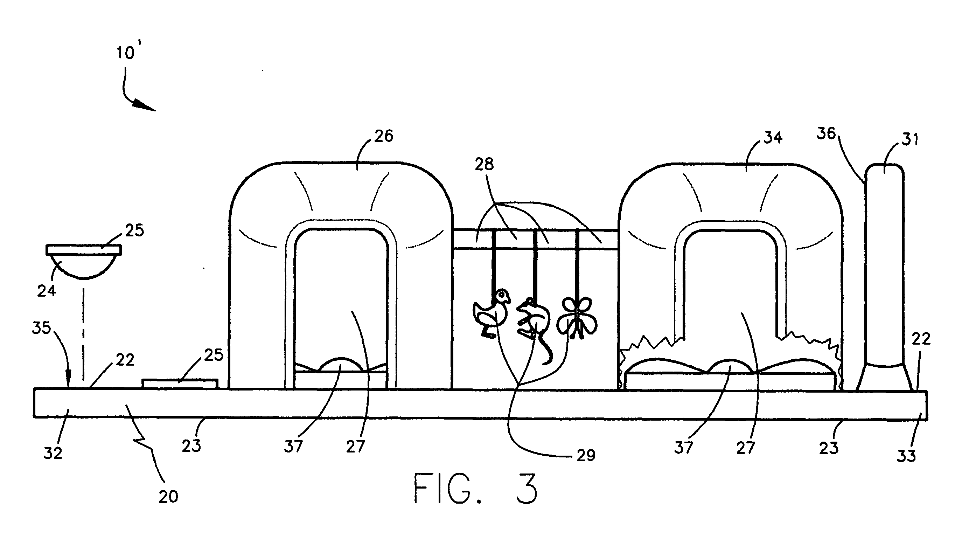

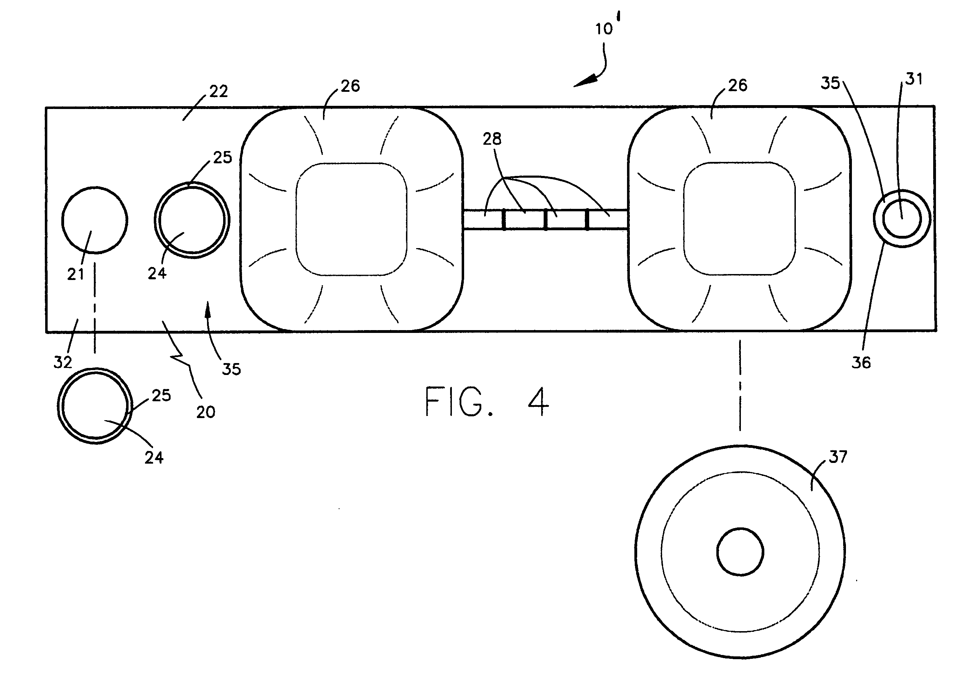

The alternative embodiment of dwelling and activity centre 10' shown in Figs. 3 and 4 has a second housing 34 spaced from the first. Support 28 is directly joined to and bridges the space between the two housings 26, 34, enabling an agile cat to travel between the two housings without touching the base.

A removable pillow or cushion 37 is suitably provided within the or each housing to provide bedding.

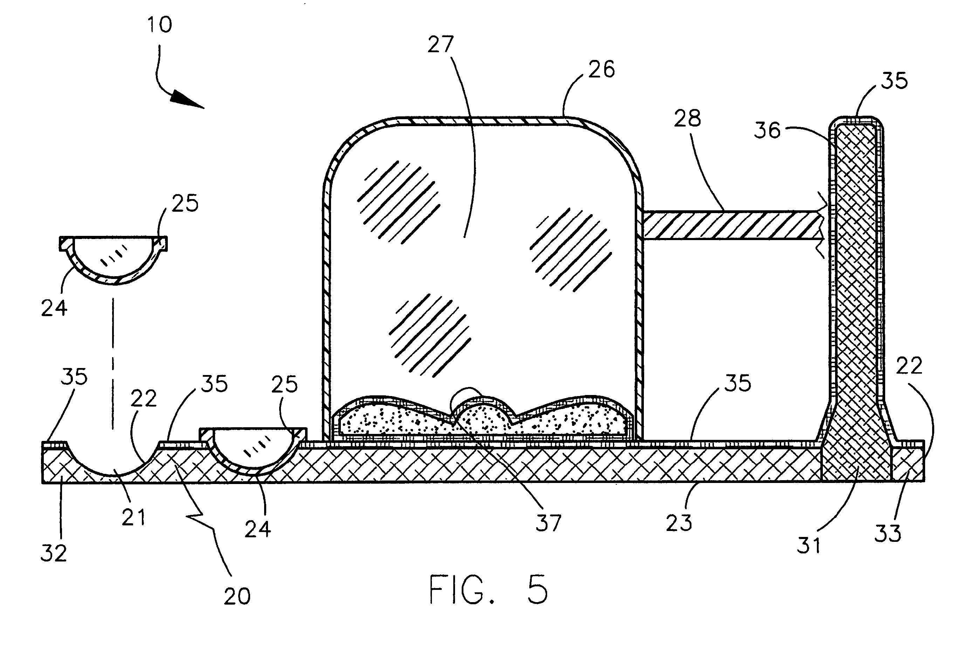

A carpet layer 35 (Fig. 5) may be provided across the top surface of the planar base member and is preferably seamless to avoid the carpet layer fraying, particularly when attacked by a cat. A similar carpet layer 35 may cover the surface of the scratch pole 31.

## Claims

1. A dwelling and activity centre for a pet, **characterised in** comprising a unitary portable structure defining a feeding station and a sleeping station; the structure comprising: a planar base member; at least one recess formed in a top surface of the base member and adapted to seat a removable plate or saucer, thereby defining said feeding station; a housing directly connected to said base member and having a front opening allowing access for a pet to the interior thereof, the housing being adapted to receive a removable pillow or cushion, thereby defining said sleeping station; and a play station comprising one or more of, and preferably both of, a support directly joined to said housing and extending laterally thereof at a level above the planar base member and mounting one or more pet toys, and means, providing a scratching surface, preferably a scratch pole, the means upstanding from and being directly coupled to said base member.

2. A dwelling and activity centre for a pet according to Claim 1, further **characterised in that** the recess is part spherical in configuration extending downwardly from the top surface of the base plate and terminating above a bottom surface thereof.

3. A dwelling and activity centre for a pet comprising a centre according to Claim 1 or Claim 2, together with removable saucers adapted to fit in the at least one recess with a top lip of the saucer remaining exposed above the top surface of the base member.

4. A dwelling and activity centre for a pet according to any preceding Claim, further **characterised in that** the support mounts one or more novelty mobiles above the level of the base member.

5. A dwelling and activity centre for a pet according to Claim 4, further **characterised in that** the means providing a scratching surface and the support are positioned relative to each other so that an animal may freely rotate the mobiles about the support without interference with the means providing a scratching surface.

6. A dwelling and activity centre for a pet according to Claim 4, further **characterised in that** a scratch pole and the support are positioned relative to each other so that a cat may climb the pole and catch at least one said mobile rotated about the support by a human.

7. A dwelling and activity centre for a pet according to any preceding Claim, further **characterised in that** the feeding station and the play station are separated from each other by the housing.

8. A dwelling and activity centre for a pet according to any of Claims 1 to 5, further **characterised in that** the planar base member has a first end and a second end, the feeding station being defined adjacent one said end with the housing located centrally between the two ends.

9. A dwelling and activity centre for a pet according to Claim 1, further **characterised in that** a second housing is provided spaced from the first said housing and also directly connected to the base member, and the support extends between the two housings.
